# EUROPEAN PATENT APPLICATION

(11) **EP 3 647 827 A1**
(43) Date of publication of application: **06.05.2020**
(21) Application number: 19205759.4
(22) Date of filing: 28.10.2019
(51) Int. Cl.: G01V 3/12, G01S 13/86, G01S 13/88, G01V 3/15

(54) **INFRASTRUCTURE EVALUATION AND MONITORING USING GROUND PENETRATING RADAR DATA**

(30) Priority: 31.10.2018 US 201816177224
(71) Applicant: Xerox Corporation, Webster, NY 14580 (US)
(72) Inventor: FOWLER, Jeffrey M., Rochester, NY 14625 (US)
(74) Representative: Gill Jennings & Every LLP

(57) **Abstract**

Methods and systems provide infrastructure information including subsurface images captured by ground penetrating radar (GPR) carried by vehicles including mobile data processing devices. Computer readable data further includes location information for the subsurface images based on a location of the vehicle and can include GPS, images and video. The computer readable data can be wirelessly transmitted to a remote server for storage in a database and for retrieval by registered users for display of infrastructure information including subsurface images captured by GPR, based on the received and stored computer readable data. The subsurface images and the location information can be provided for infrastructure where changes are detected based on previously stored infrastructure information related to the location where the subsurface images are captured by GPRs and reported to the server.

## Description

The present embodiments are generally related to data acquired by surface penetrating radar. Embodiments more particularly relate to the use of data obtained by vehicle-based ground penetrating radars to monitor and maintain infrastructure associated with roadways.

Most autonomous vehicles rely on optical systems that 'see' road surfaces and surrounding infrastructure to localize themselves. Optical systems are faster and more accurate than global positioning system (GPS) devices in determining an autonomous vehicle's location during movement. Optical systems work well in fair weather conditions, but it is challenging and risky for them to work when snow covers lane markings and road surfaces or fog obscures points of reference. Even in fair conditions, having an independent sensor to rely on when your optics aren't working could add several orders of magnitude to the reliability of current autonomous lane keeping systems.

US Patent No. 8,949,024 describes a method of acquiring surface penetrating radar (SPR) images of a subsurface region along a vehicle track. Acquired SPR images are compared to SPR images previously acquired for a subsurface region that at least partially overlaps the subsurface region along the vehicle track. In some embodiments, the comparison includes an image correlation procedure. Location data for the vehicle are determined based in part on location data for the SPR images previously acquired for the second subsurface region. Location data can be used to guide the vehicle along a desired path. The relatively static nature of features in the subsurface region provides the method with advantages over other sensor-based navigation systems that may be adversely affected by weather conditions, dynamic features and time-varying illumination.

What is not addressed by current systems, and what is currently needed, is the ability to utilize data obtained by vehicle using GPR/SPR for navigational purposes for other than vehicle navigation. Navigational of vehicles as taught in the art requires the capture of subsurface data, but this data can be useful for other purposes not yet contemplated where data is crowd-sourced. Infrastructure in the United States and elsewhere is in need of maintenance or replacement. Evaluation and monitoring are extremely resource intensive. Much affected infrastructure is either present in the form of road or is located underneath roads (e.g., underground utilities). A partial list of relevant issues includes, among other things, leaking pipes, subsurface erosion, inadequately mapped legacy infrastructure, and obstructed pipes. Leaking pipes for water, sewer, natural gas, and steam can lead to waste, contamination and subsurface erosion leading to sinkholes. Corrosion of bridges, for example, can lead to structural failure. Inadequately mapped legacy infrastructure can lead to inflated costs associated with its maintenance or in implementing new replacement infrastructure. Obstructed pipes can lead to increased energy consumption for pumping or reduced capacity.

The present embodiments believe that data obtained by SPR and complimentary sensors (e.g., GPS, imaging) currently contemplated for use only to navigate vehicles independently can be pooled and leveraged by other users for monitoring and maintenance, or enhancement, of existing infrastructure.

It is therefore an aspect of the embodiments to provide methods and system for obtaining infrastructure information including subsurface images captured by ground penetrating radar (GPR) carried by vehicles where the vehicles include mobile data processing devices and provide the infrastructure information to user (e.g., infrastructure managers/maintainers).

It is another aspect of the embodiments that computer readable data further include location information for the subsurface images based on a location of the vehicle. It is a further aspect that location can be determined by GPS and/or from the subsurface images.

It is another aspect of the embodiments that infrastructure information can include images and/or video.

It is yet another aspect of the embodiments that computer readable data including infrastructure information can be wirelessly transmitted to a remote server for storage in a database and for retrieval by registered users (e.g., infrastructure managers/maintainers) for display of infrastructure information including subsurface images captured by GPR on a display device.

It is another aspect of the embodiments that subsurface images and the location information can be provided for infrastructure where changes are detected based on matching to previously stored infrastructure information related to the location where the subsurface images are captured by GPRs and reported to the server.

It is an aspect of the embodiments that infrastructure information can be received at a remote server from vehicles including a mobile data processing device communicatively coupled to a ground penetrating radar carried by the vehicles, where the computer readable data including subsurface images captured by a ground penetrating radar and location information for the subsurface images stored in the server, or a database associated with the server, are based on a location of the vehicle.

It is still another aspect of the embodiments that the computer readable data can further include images obtained by a camera, video and GPS information for the vehicle.

It is yet another aspect of the embodiment that computer readable data can be obtained by a vehicle being navigated over roadways as an autonomous vehicle.

It is another aspect of the embodiment that a system includes a database for storing computer readable data including subsurface images captured by ground penetrating radar carried by the vehicle and communicatively coupled to the mobile data processing device.

It is yet another aspect of the embodiments that a system include a memory for storing computer executable instructions to perform a method of presenting the computer readable data to registered users of the system, with steps of the method including: receiving from a vehicle including a mobile data processing device, computer readable data comprising subsurface images captured by a ground penetrating radar carried by the vehicle and communicatively coupled to the mobile data processing device, and location information for the subsurface images based on a location of the vehicle; and transmitting the computer readable data to a remote server for storage in a database for retrieval by the registered users for display of the computer readable data on a display device.

It is another aspect of the embodiments that the computer data readable data be provided by vehicles as part of a crowd-sourced infrastructure data retrieval system where data obtained from vehicles using ground penetrating radar for navigational purposes is also retrieved and stored for evaluation by users concerned with the status of subsurface infrastructure.

Benefits of the embodiments include the collection of surface and subsurface data that can be marketed to city, state and federal agencies so that they may schedule and perform infrastructure maintenance. The embodiments should prove valuable to municipalities, as well as transportation and engineering businesses.

It is an aspect of the embodiment that data generated by vehicles and sent for storage in the server can be subject to terms of use as a service offered to municipalities or contactors tasked with managing or maintaining the monitored infrastructure. Services providing data can identify the source of the data. The GPR data would enable infrastructure management and maintenance to be more effective and more efficient.

The aforementioned aspects and other objectives and advantages can now be achieved as described herein. A mobile vehicle equipped with ground penetrating radar can collect data including subsurface images together with GPS and other localizing information (e.g., images, video), the information including location can be utilized to precisely establish the location of the vehicle. A centralized map database can allow the vehicle to use the data to navigate a route without mapping the route itself. The maps and databases can also be analyzed by infrastructure managers to evaluate the current state of a roadbed and associated infrastructure. Changes over time can be used to monitor gradual or acute damage. Analysis can be accomplished centrally or data can be pre-processed on the vehicle.
FIG. 1 depicts a system diagram of components that can be included in accordance with carrying out embodiments of the present invention.
FIG. 2 depicts an alternative system is illustrated wherein the vehicles are equipped with additional systems including a GPS and an imaging camera, in accordance with the embodiments.
FIG. 3 depicts a block diagram of the types of computer readable data that can be compiled by a vehicle and provided over a communications network to a remote server for use in infrastructure management, in accordance with the embodiments.
FIG. 4 depicts a flow diagram for a method of providing infrastructure information, in accordance with the embodiments.
FIG. 5 depicts a flow diagram for a method of providing infrastructure information to infrastructure managers, in accordance with the embodiments.
FIG. 6 depicts a flow diagram for a method of providing subsurface infrastructure information to registered uses of a remote server, in accordance with yet another embodiment.

Several aspects of data-processing systems may now be presented with reference to various systems and methods. These systems and methods can be described in the following detailed description and illustrated in the accompanying drawings by various blocks, modules, components, circuits, steps, processes, algorithms, engines, applications, etc. (which can be individually or collectively referred to as "elements"). These elements can be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer, from a server, from a cloud-based system. By way of example, and not limitation, such computer-readable media can include read-only memory (ROM) or random-access memory (RAM), electrically erasable programmable ROM (EEPROM), including ROM implemented using a compact disc (CD) or other optical disk storage, magnetic disk storage or other magnetic storage devices, or any other medium that can be used to carry or store desired program code in the form of instructions or data structures and that can be accessed by a computer. Combinations of the above should also be included within the scope of computer-readable media.

The term "computing device" as utilized herein generally refers to a device that includes a processor/microcontroller and/or any other digital components, for performing one or more operations according to one or more programming instructions. In other words, the computing device has image processing capability, for example, generating a document in the context of the current disclosure. Also, such a computing device can communicate with a scanning device as and when required. A few examples of a computing device include but are not limited to a server, a desktop PC, a notebook, a workstation, a personal digital assistant (PDA), a mainframe computer, a mobile computing device (e.g., a mobile phone, a tablet, etc.), an internet appliance, and so on. In some instances the term "data-processing system" can be utilized interchangeably with the term "computing device".

The term "communications network" as utilized herein refers to the global computer network providing a variety of information and communication facilities, consisting of interconnected networks using standardized wired and wireless data communication protocols. Communications networks can include cellular communications networks (e.g., GSM, CDMA, LTE, 5G, etc.), Wifi, satellite, and distributed transponder-based networks adapted to support data communications between devices (e.g., mobile devices and servers).

**As** can be appreciated by one skilled in the art, example embodiments can be implemented in the context of a method, data-processing system, or computer program product. Accordingly, some embodiments may take the form of an entirely hardware embodiment, an entirely software embodiment or an embodiment combining software and hardware aspects all generally referred to herein as a "circuit" or a "module." Furthermore, embodiments may in some cases take the form of a computer program product on a computer-usable storage medium having computer-usable program code embodied in the medium. Any suitable computer readable medium may be utilized including hard disks, USB Flash Drives, DVDs, CD-ROMs, optical storage devices, magnetic storage devices, server storage, databases, and so on.

Computer program code for carrying out operations of the present invention may be written in an object oriented programming language (e.g., Java, C++, etc.). The computer program code, however, for carrying out operations of particular embodiments may also be written in conventional procedural programming languages, such as the "C" programming language or in a visually oriented programming environment, such as, for example, Visual Basic.

Program code may execute entirely on the user's computer, partly on the user's computer, as a stand-alone software package, partly on the user's computer and partly on a remote computer or entirely on the remote computer. In the latter scenario, the remote computer may be connected to a user's computer through a local area network (LAN) or a wide area network (WAN), wireless data network e.g., Wi-Fi, Wimax, 802.xx, and cellular network or the connection may be made to an external computer via most third party supported networks (for example, through the Internet utilizing an Internet Service Provider).

Disclosed example embodiments can be described at least in part herein with reference to flowchart illustrations and/or block diagrams of methods, systems, and computer program products and data structures according to embodiments of the invention. It will be understood that each block of the illustrations, and combinations of blocks, can be implemented by computer program instructions. These computer program instructions may be provided to a processor of, for example, a general-purpose computer, special-purpose computer, or other programmable data processing apparatus to produce a machine, such that the instructions, which execute via the processor of the computer or other programmable data processing apparatus, create means for implementing the functions/acts specified in the block or blocks.

To be clear, the disclosed embodiments can be implemented in the context of, for example a special-purpose computer or a general-purpose computer, or other programmable data processing apparatus or system. For example, in some example embodiments, a data processing apparatus or system can be implemented as a combination of a special-purpose computer and a general-purpose computer.

The aforementioned computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the various block or blocks, flowcharts, and other architecture illustrated and described herein.

Computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the block or blocks.

Flowcharts and block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s).

In some alternative implementations, functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Reference is made herein to surface penetrating radar (SPR) and ground penetrating radar (GPR). As used herein, SPR means any radar system that is configured to acquire data from a subsurface region. A SPR can be configured and oriented to obtain data for a subsurface region that is behind the surface of a wall, ceiling, floor or the surface surrounding a tunnel or passageway. In some instances the SPR can also obtain data for the surface. It will be recognized that a GPR system is a type of SPR system that is configured to acquire data from a region below the surface of the ground and may also acquire data for the surface of the ground. It will also be recognized that Localizing Ground-Penetrating Radar (LGPR) is just a more recent form and application of SPR. A "subsurface region", as used herein, means a region behind the surface such as an underground region behind the ground surface. Alternatively, the subsurface region can be a region behind a surface of a structure, such as a region inside and/or behind a wall or ceiling structure.

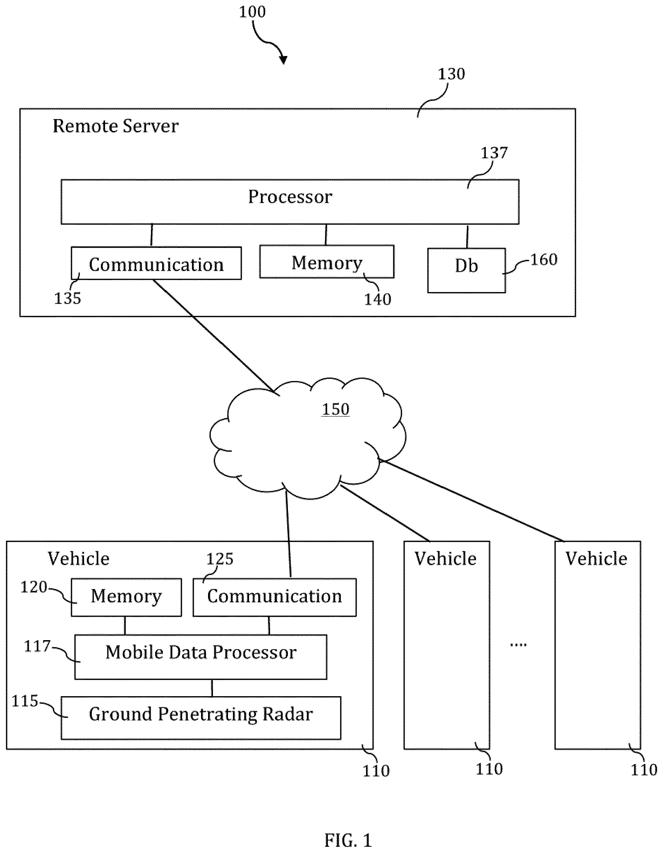

Referring to FIG. 1, depicted is a system diagram 100 of components that can be included in accordance with carrying out embodiments of the present invention. Vehicles 110 can include a ground penetrating radar 115 for penetrating and capturing images of subsurface regions along roadways, a mobile data processor 117 for carrying out imaging (i.e., capturing and processing GPR images) and transforming captured image into subsurface images, a memory 120 for storing computer readable data including subsurface images, and communications hardware 125 for enabling the vehicle to wirelessly communicate over a communication network 150 with a remote server 130. The remote server 130 also includes communications hardware 135 and a processor 137 for processing data received from the vehicles 110, a memory 140 for storing code or programming instructions necessary to enable user registration and remote registered user access to stored computer readable data, and a database 160. Vehicles 110 can be human driven or autonomous vehicles. When autonomously operated, vehicles 110 can be navigated by assistance of the ground penetrating radar 115.

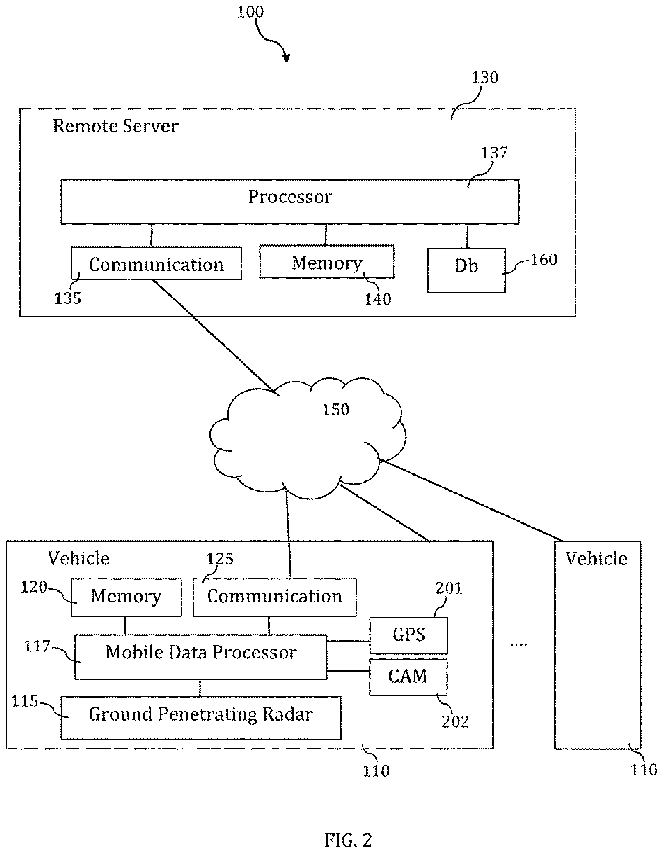

Referring to FIG. 2, an alternative system 200 is illustrated wherein the vehicles 110 are equipped with additional systems including a GPS 201 and an imaging camera 202. The GPS and imaging camera can be used to help navigate the vehicles 110, especially if the vehicles are autonomously operated. The GPS 101 and imaging 202 can also be used to provide additional information (e.g., location and pictures/video) with the computer readable data provided to the remote server along with subsurface images, which can be useful to users of the computer readable data for use in infrastructure evaluation and management.

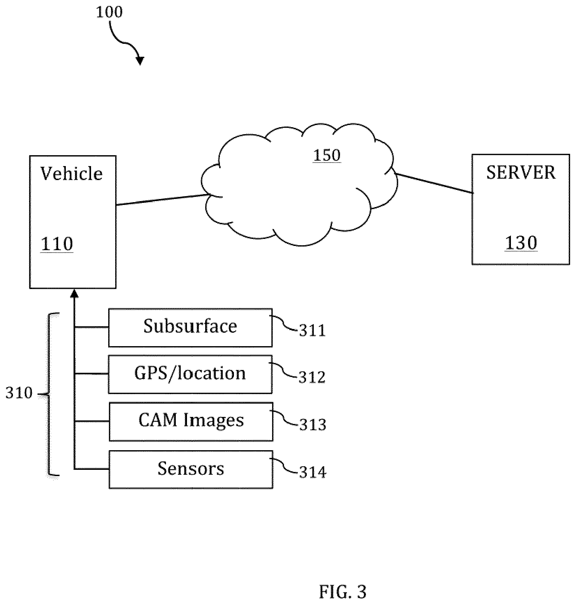

Referring to FIG. 3, depicted is a block diagram 300 of the types of computer readable data 310 that can be compiled by a vehicle 110 and provided over a communications network 150 to a remote server 130 for use in infrastructure management. Computer readable data 310 can include subsurface images 311 captured by ground imaging radar 115, GPS data 312 providing vehicle location information associated with the captured subsurface images 311, pictures/video 313 captured by a camera, and sensor data 314. Sensor data can include other parameters that may be deemed useful in association with the computer readable data associated with an evaluated location and infrastructure. For example, temperature, moisture/humidity, visibility, weather, sound, and lighting could be data that can be simultaneously captured by a vehicle 110 and provided to the remote server 130 for evaluation together with the computer readable data 310.

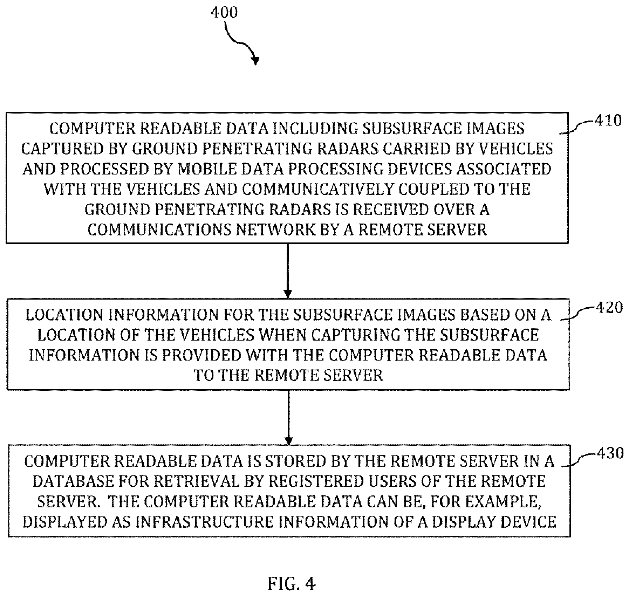

Referring to FIG. 4, depicted is a flow diagram 400 for a method of providing infrastructure information in accordance with the embodiments. Referring to Block 410, computer readable data including subsurface images captured by ground penetrating radars carried by vehicles and processed by mobile data processing devices associated with the vehicles and communicatively coupled to the ground penetrating radars is received over a communications network by a remote server. Referring to Block 420, location information for the subsurface images based on a location of the vehicles when capturing the subsurface information is provided with the computer readable data to the remote server. Referring to Block 430, the computer readable data is stored by the remote server in a database for retrieval by registered users of the remote server. The computer readable data can be, for example, displayed as infrastructure information of a display device.

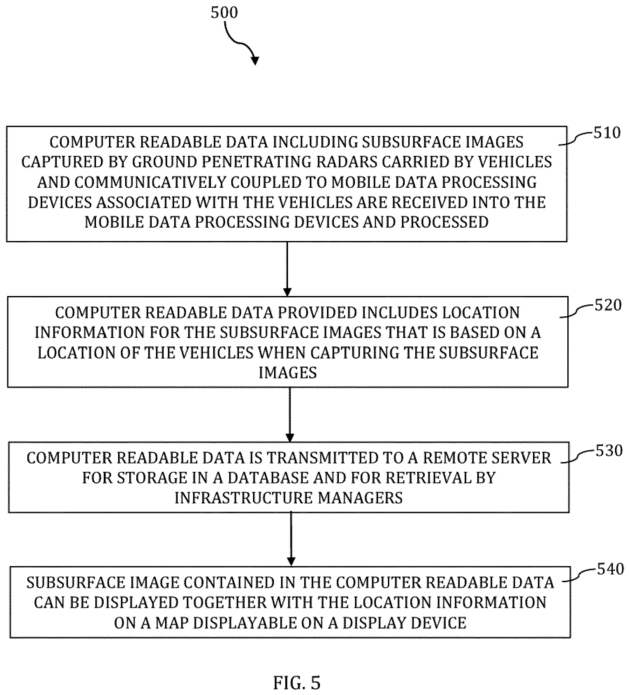

Referring to FIG. 5, depicted is a flow diagram 500 for a method of providing subsurface infrastructure information to infrastructure managers, in accordance with another embodiment. Referring to Block 510, computer readable data including subsurface images captured by ground penetrating radars carried by vehicles and communicatively coupled to mobile data processing devices associated with the vehicles are received into the mobile data processing devices and processed. Referring to Block 520, the computer readable data provided includes location information for the subsurface images that is based on a location of the vehicles when capturing the subsurface images. Referring to Block 530, the computer readable data is transmitted to a remote server for storage in a database and for retrieval by infrastructure managers. The subsurface image contained in the computer readable data can be displayed together with the location information on a map displayable on a display device, as shown in Block 540.

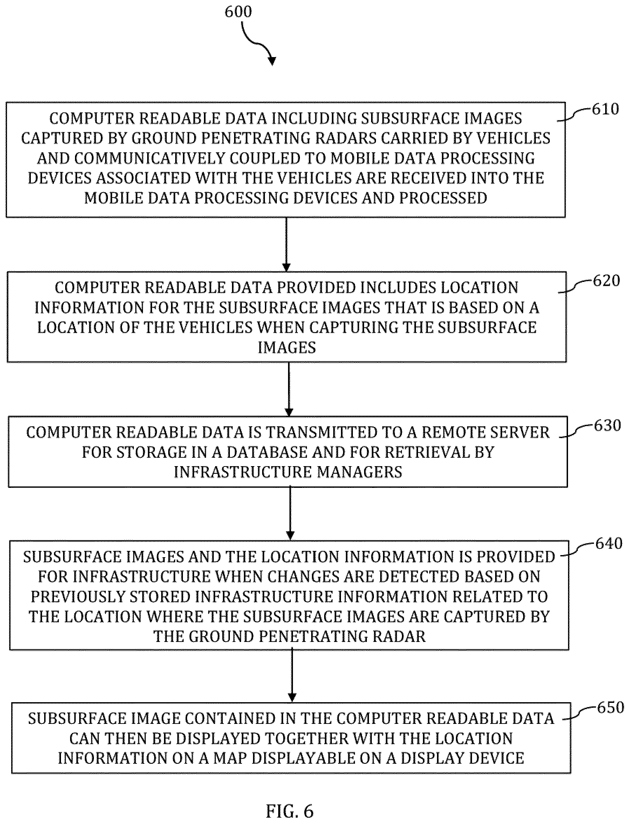

Referring to FIG. 6, illustrated is a flow diagram 600 for a method of providing subsurface infrastructure information to registered uses of a remote server, in accordance with yet another embodiment. As shown in Block 610, computer readable data including subsurface images captured by ground penetrating radars carried by vehicles and communicatively coupled to mobile data processing devices associated with the vehicles are received into the mobile data processing devices and processed. Referring to Block 620, the computer readable data provided includes location information for the subsurface images that is based on a location of the vehicles when capturing the subsurface images. Referring to Block 630, the computer readable data is transmitted to a remote server for storage in a database and for retrieval by infrastructure managers. Then as shown in Block 640, subsurface images and the location information are provided for infrastructure when changes are detected based on previously stored infrastructure information related to the location where the subsurface images are captured by the ground penetrating radar. As shown in Block 650, the subsurface image contained in the computer readable data can then be displayed together with the location information on a map displayable on a display device.

It is an aspect of the embodiments described herein that LPGR obtained for navigation of self-driving cars could be leveraged for other useful purposes. The present inventor has recognized that even modest implementation of LPGR technology can generate a wealth of data that could be of immense utility in evaluating and monitoring the state of infrastructure at and below road surfaces. Helpful implementation levels for obtaining infrastructure data could range anywhere from a single fleet of vehicles such as New York City cabs or long-haul transport trucks, to near-universal application in private vehicles. Infrastructure imaging can help municipalities and government with more thorough evaluation of utilities. Ground penetrating radar captured data can be collected and then it can be crowd-sourced from entities like Lincoln Laboratory or WaveSense for the benefit of infrastructure managers. Data collected by other sensors used in vehicles can also be leveraged for infrastructure information. Data can also be accessed by roaming vehicles, stored in the cloud and retrieved by municipalities (etc.) on a subscription basis.

The invention can make use of Localizing Ground Penetrating Radar (LPGR) for navigation of self-driving vehicles. Benefits of the invention include the collection of surface and subsurface data that can be marketed to city, state and federal agencies for their use to schedule and perform infrastructure maintenance. The invention can be valuable to municipalities, as well as transportation and engineering businesses.

The invention provides a system and method for reporting subsurface infrastructural status that can be used to guide or warn registered users of an event or future hazard with reference to the infrastructure being monitored or evaluated. Infrastructure data can be obtained by ground penetrating radar continuously or periodically as vehicles with GPR system installed pass over roadways where under infrastructure is located. Vehicles can easily report infrastructure status to a remote server by wirelessly sending data to the event server via a wireless communications network. Secondary information may be included, such as images, audio, and video of locations associated with the radar-imaged infrastructure. The server stores the captured information, including location based on the reported locations of the transmitting mobile units, and makes this information available to allow other users to respond to monitor or respond to infrastructure issues identified in the data.

The data generated by vehicles and sent for storage in the server can be subject to terms of use as a service offered to municipalities or contactors tasked with managing or maintaining the monitored infrastructure. Services providing data can identify the source of the data. The GPR data would enable infrastructure management and maintenance to be more effective and more efficient.

In accordance with an aspect of the embodiments, a mobile vehicle equipment with ground penetrating radar can collect data including subsurface images together with GPS and other localizing information (e.g., images, video), the information including location can be utilized to precisely establish the location of the vehicle. A centralized map database can allow the vehicle to use the data to navigate a route without mapping the route itself. The maps and databases can also be analyzed to evaluate the current state of the roadbed and associated infrastructure by infrastructure managers. Changes over time can be used to monitor gradual or acute damage. Analysis can be accomplished centrally or data can be pre-processed on the vehicle.

Data collected and/or analysis that is provided from GPR imaging on a set of vehicles can be utilized to evaluate, monitor and map infrastructure and infrastructure issues, including but not limited to status of pipelines, sewers, cables, conduits, tunnels, culverts, bridges, roadbeds, and parking decks. Data can also be used in order to detect conditions including but not limited to existence of leaks, shifts, voids, roots, groundwater, corrosion, and obstructions. Data can help with identifying maintenance needs, setting priorities, planning projects (e.g. where to dig to maintain existing infrastructure, where to route new infrastructure, designing foundations for new construction), obtaining warnings of imminent threats (e.g. automatically route traffic around sudden changes), modeling resource availability (e.g. groundwater levels), freeing other inspection resources to concentrate on infrastructure not co-located with roads, and completing scientific studies (e.g. ground movements from earthquakes).

## Claims

1. A method for obtaining infrastructure information, comprising: (a) receiving computer readable data at a remote server over a communication network from vehicles including mobile data processing devices, wherein the computer readable data includes subsurface images captured by ground penetrating radars carried by the vehicles and communicatively coupled to the mobile data processing devices, wherein the computer readable data includes location information for the subsurface images based on a location of the vehicles when capturing the subsurface images; and (b) storing the computer readable data by the remote server in a database for retrieval by registered users of the remote server to display the computer readable data as infrastructure information on a display device.

2. The method of claim 1, wherein the computer readable data further comprises images obtained by a camera.

3. The method of claim 1, wherein the location information further comprises GPS information.

4. The method of claim 1, wherein computer readable data further comprises video recordings.

5. The method of claim 1, wherein step (b) comprises displaying a map on the display device, and displaying location information on the map in association with the subsurface images associated with infrastructure information being displayed to a registered user.

6. The method of claim 1, where subsurface images and location information is provided to the registered users for infrastructure where changes are detected based on previously stored information related to the location where the subsurface images are captured by the ground penetrating radar.

7. The method of claim 1, where subsurface images and location information is provided to users for infrastructure and locations requested by a registered user.

8. The method of claim 1, wherein the computer readable data is obtained by the vehicle in the course of the vehicle being navigated over roadways as an autonomous vehicle.

9. An infrastructure data monitoring and archiving system, comprising: a remote server including a database for storing computer readable data including subsurface images captured by ground penetrating radars carried by vehicles and communicatively coupled to mobile data processing devices associated with the vehicles, communications hardware supporting communications with the mobile data processing devices over a communications network; a memory storing computer executable instructions for performing a method of presenting the computer readable data to registered users of the system, said method comprising: receiving from the vehicles including the mobile data processing devices, computer readable data comprising subsurface images captured by the ground penetrating radars carried by the vehicles and communicatively coupled to the mobile data processing devices, wherein the computer readable data includes location information for the subsurface images based on a location of the vehicles when capturing the subsurface images; and transmitting the computer readable data to the remote server for storage in the database and for retrieval by the registered users for displaying infrastructure information based on the received and stored computer readable data on a display device.

10. The system of claim 9, wherein the computer readable data further comprises images obtained by a camera.

11. The method of claim 9, wherein the location information is comprised of GPS information.

12. The method of claim 9, wherein the computer readable data further comprises video recordings.

13. The method of claim 9, wherein the computer executable instructions are further configured to receive the registered users' input to display a map on the display device, and to display location information in association with the subsurface images associated with infrastructure of interest by the registered users.

14. The method of claim 9, where subsurface images and location information is provided to the registered users for infrastructure where changes are detected based on previously stored information related to the location where the subsurface images are captured by the ground penetrating radar.

15. The method of claim 9, where subsurface images and location information is provided to the registered users for infrastructure and locations requested by the registered users.

16. The method of claim 9, wherein the computer readable data is obtained by vehicles in the course of the vehicles being navigated over roadways as autonomous vehicles.

17. A method for providing subsurface infrastructure information to infrastructure managers, comprising: (a) receiving from vehicles including mobile data processing devices, computer readable data including subsurface images captured by ground penetrating radars carried by the vehicles and communicatively coupled to the mobile data processing devices, wherein the computer readable data includes location information for the subsurface images based on a location of the vehicles when capturing the subsurface images; and (b) transmitting the computer readable data to a remote server for storage in a database and for retrieval by infrastructure managers to display the subsurface images and the location information on a map displayable on a display device.

18. The method of claim 17, wherein the subsurface images and the location information is provided for infrastructure where changes are detected based on previously stored infrastructure information related to the location where the subsurface images are captured by the ground penetrating radar.

19. The method of claim 17, where the subsurface images and the location information is provided for infrastructure and locations requested by an infrastructure manager.

20. The method of claim 1, wherein the computer readable data is obtained autonomous vehicles.
